# EUROPÄISCHE PATENTSCHRIFT

(11) **EP 1 050 420 B1**
(45) Veröffentlichungstag und Bekanntmachung des Hinweises auf die Patenterteilung: **31.07.2002**
(21) Anmeldenummer: 00107463.2
(22) Anmeldetag: 06.04.2000
(51) Int. Cl.: B60H 1/32, B60H 1/00

(54) **Verfahren und Regelung der Vedampfertemperatur bei einer Fahrzeug-Klimaanlage**
Method and control of the temperature of an evaporator in a vehicle air conditioner
Méthode et contrôle de la température d' un évaporateur d'une installation de climatisation de véhicule automobile

(30) Priorität: 03.05.1999 DE 19920093
(43) Veröffentlichungstag der Anmeldung: 08.11.2000
(73) Patentinhaber: Bayerische Motoren Werke Aktiengesellschaft, 80809 München (DE)
(72) Erfinder: Herpel, Thomas, Dr., 85737 Ismaning (DE); Morgenstern, Stefan, 81827 München (DE)

(56) Entgegenhaltungen:
- DE-A- 4 212 680
- DE-A- 19 728 577
- DE-A- 19 728 578
- DE-C- 19 608 015
- PATENT ABSTRACTS OF JAPAN vol. 010, no. 018 (M-448), 24. Januar 1986 (1986-01-24) & JP 60 176809 A (MITSUBISHI JUKOGYO KK), 10. September 1985 (1985-09-10)
- PATENT ABSTRACTS OF JAPAN vol. 008, no. 262 (M-341), 30. November 1984 (1984-11-30) & JP 59 134006 A (NISSAN JIDOSHA KK), 1. August 1984 (1984-08-01)

## Beschreibung

Die Erfindung betrifft ein Verfahren zur Regelung der Verdampfertemperatur bei einer Fahrzeug-Klimaanlage gemäß dem Oberbegriff des Patentanspruchs 1.

Klimaanlagen in Fahrzeugen sind allgemein bekannt. In der Regel verdichtet ein Kompressor ein gasförmiges Kältemittel und beim Durchströmen des Kältemittels durch einen Kondensator, ein Expansionsorgan und einen Verdampfer wird die ebenfalls durch den Verdampfer strömende Luft gekühlt. Die Absenkung der Lufttemperatur erfolgt meist auf eine Temperatur von etwa 1°C bis 3°C. Da diese meist unter dem Taupunkt der zur Kühlung angesaugten Luft liegt, kondensiert am Verdampfer Wasser aus, die Luft wird getrocknet. Nachfolgend wird in den meisten Betriebszuständen die abgekühlte Luft wieder erwärmt, damit sie optimal temperiert in den Innenraum gelangt. Die ungeachtet der Klimatisierungsanforderung erfolgende Abkühlung auf 1°C bis 3°C erfordert demzufolge meist zuviel Kühlleistung.

Daher wird es u. a. Aufgabe der nachfolgenden Erfindung sein, die Klimaanlage immer nur so zu betreiben, dass die Luft auf eine gerade erforderliche Temperatur abgekühlt wird. Dazu ist es erforderlich, die Verdampfertemperatur einzustellen und zwar entsprechend den Erfordernissen im Fahrzeug.

Aus der DE 196 08 015 C1 ist ein Luftmischverfahren für eine Klimaanlage eines Fahrzeugs zur Energieverbrauchssenkung bekannt, bei der u. a. auch die spezifische Enthalpie zur Mischung von Frisch- und Umluft berücksichtigt wird. Insbesondere wird einem Wärmetauscher eine Mischluft mit der kleinsten spezifischen Enthalpiedifferenz zur Verfügung gestellt. Zum Auffinden der spezifischen Enthalpie wird die Temperatur und die relative Feuchtigkeit der Luft gemessen. Eine Verdampfertemperaturregelung ist aus der DE 196 08 015 C1 jedoch nicht bekannt.

Aus der DE 197 28 578 A1 ist ein Verfahren zur außentaupunktabhängigen Verdampfertemperatursteuerung bekannt, bei dem die Lufttemperatur und die Taupunkttemperatur der von der Klimaanlage zur Klimatisierung eines Innenraums von einem Außenraum angesaugten Luft bestimmt werden und aus Innenraum-Temperatur-Sollwertvorgabe eine gegenheizfreie Verdampfer-Anforderungstemperatur ermittelt wird. Insbesondere wird ein Sollwert verwendet, der als der kleinere Wert von einer Verdampfer-Anforderungstemperatur einerseits und der Differenz von Lufttemperatur abzüglich Taupunkttemperatur der Zuluft andererseits gewählt wird.

In der DE 42 12 680 A1 ist eine Steuervorrichtung zur Steuerung der Abgabeleistung eines Verdichters in einem Automobil-Klimagerät beschrieben. Dabei werden Soll-Kühltemperaturen basierend auf charakteristischen Schemata berechnet, und zwar die erste Soll-Kühltemperatur in Abhängigkeit der Wärmebelastungssignale und die zweite Soll-Kühltemperatur in Abhängigkeit von der Außentemperatur. Eine Auswahlschaltung wählt die niedrigere der beiden Soll-Kühltemperaturen aus, wobei im Ergebnis eine Verringerung der Entfeuchtungsleistung verhindert wird.

In der JP 60176809 ist eine Fahrzeug-Klimaanlage beschrieben, bei der eine Verdampfertemperatur aus zwei ermittelten Temperaturen ausgewählt wird, nämlich einer ersten Temperatur zur Aufrechterhaltung der vorliegenden Raumtemperatur und einer Taupunkttemperatur, welche die relative Luftfeuchtigkeit auf oder unterhalb eines vorgegebenen Wertes hält. Mit dieser Vorgehensweise kann in energiesparender Weise eine angenehme Klimaanlagensteuerung erreicht werden.

Aufgabe der vorliegenden Erfindung ist es, ein Verfahren zum Betrieb einer Klimaanlage weiterzuentwickeln, bei dem allen Komfort- und Sicherheitsbedingungen Rechnung getragen wird.

Diese Aufgabe wird durch die im Anspruch 1 genannten Merkmale gelöst. Zur Vermeidung eines unnötigen Energieverbrauchs wird die Verdampfertemperatur auf einen Temperaturwert eingeregelt, der sowohl den Komfort- als auch den Sicherheitsaspekten Rechnung trägt. Zum einen wird ein Verdampfertemperaturwert bezüglich einer bestimmten Luftfeuchte ermittelt. Zum anderen wird ein Verdampfertemperaturwert zur Sicherstellung einer ausreichenden Kühlleistung ermittelt. Sodann wird der kleinste der vorgenannten Verdampfertemperaturwerte ausgewählt. Der Verdampfertemperaturwert, welcher bezüglich einer gewünschten Luftfeuchte ermittelt wird, ist in Abhängigkeit von Beschlagskriterieen der Fahrzeugscheiben und Komfortkriterien zu ermitteln. Damit wird zum einen sichergestellt, daß die Sicht des Fahrers nicht beeinträchtigt wird. Zum anderen wird auf ein angenehmes, nicht zu trockenes Raumklima für die Fahrzeuginsassen geachtet. Für beide Fälle ergibt sich eine maximale zulässige Luftfeuchtigkeit im Fahrzeug. So darf der Taupunkt der Luft die Temperatur der Scheibeninnenflächen, die hierzu berechnet werden müssen, nicht unterschreiten. Als Komfortgrenzwert dient eine maximal zulässige Enthalpie der Luft im Fahrzeuginnenraum, die aus Feuchte und Temperatur bestimmt wird.

Die Innenraumfeuchte ist unter anderem eine Funktion der Wasserdampfabgabe der Insassen, sowie der Einblasluftmenge und -feuchte. Der Einblasluftzustand ist unter anderem durch die Verdampfertemperatur zu beeinflussen. Sie ist so einzustellen, daß die Innenraumfeuchte die zulässigen Grenzen zur Einhaltung der Beschlags- und Komfortanforderungen nicht überschreitet.

Der Verdampfertemperaturwert, der auf eine ausreichende Kühlleistung abstellt, wird durch die Soll-Einblastemperatur und die unerwünschte Erwärmung in den Luftführungsbauteilen, die dem Verdampfer nachgeschaltet sind beeinflußt. Vorzugsweise werden bei der Bestimmung der zur Sicherstellung einer ausreichenden Kühlung zugeordneten Verdampfertemperatur die Innenraumtemperatur, die Umgebungstemperatur und/oder die Sonneneinstrahlung als Einflußfaktoren für die unerwünschte Erwärmung berücksichtigt.

Eine besonders bevorzugte Ausführungsform ist dadurch gekennzeichnet, daß auf das vorgenannte Verfahren erst bei Vorliegen von bestimmten Betriebsbedingungen umgeschaltet wird. Damit wird bei kritischen Betriebsbedingungen eine immer ausreichend niedrige Verdampfertemperatur sichergestellt.

Die Erfindung wird nachfolgend anhand eines speziellen Ausführungsbeispiels - auch im Hinblick auf weitere Merkmale und Vorteile - und mit Bezug auf die beiliegenden Zeichnungen näher erläutert. Die Zeichnungen zeigen in
- Fig. 1: eine schematische Darstellung einer Klimaanlage in einem Fahrzeug,
- Fig. 2: eine schematische Blockskizze des Kältekreislaufs einer erfindungsgemäßen Ausführungsform einer Klimaanlage mit Ansteuerung,
- Fig. 3: ein Blockdiagramm, welches die Wirkungskette zur Ermittlung des Innenraumkomforts darstellt,
- Fig. 4: ein Blockdiagramm, welches die Wirkungskette zur Ermittlung des Scheibenbeschlags darstellt,
- Fig. 5: ein Blockdiagramm, weiches die Wirkungskette zur Einhaltung der Leistungsgrenze darstellt,
- Fig. 6: ein Blockdiagramm, welches die Bedingungen für eine erfindungsgemäße Verdampfertemperaturregelung darstellt,
- Fig. 7: ein Blockdiagramm, welches die Auswahlkriterien für die Verdampfertemperatur darstellt,
- Fig. 8: ein Blockdiagramm, welches die Verdampfertemperatur unter Beachtung des Feuchtekriteriums darstellt
- Fig. 9: ein Blockdiagramm, welches die Verdampfertemperatur unter dem Kriterium der Kühlleistung darstellt sowie
- Fig. 10: Blockschaltbild, welches einen Aufbau für eine erfindungsgemäße Verdampfertemperaturregelung im Fahrzeug zeigt.

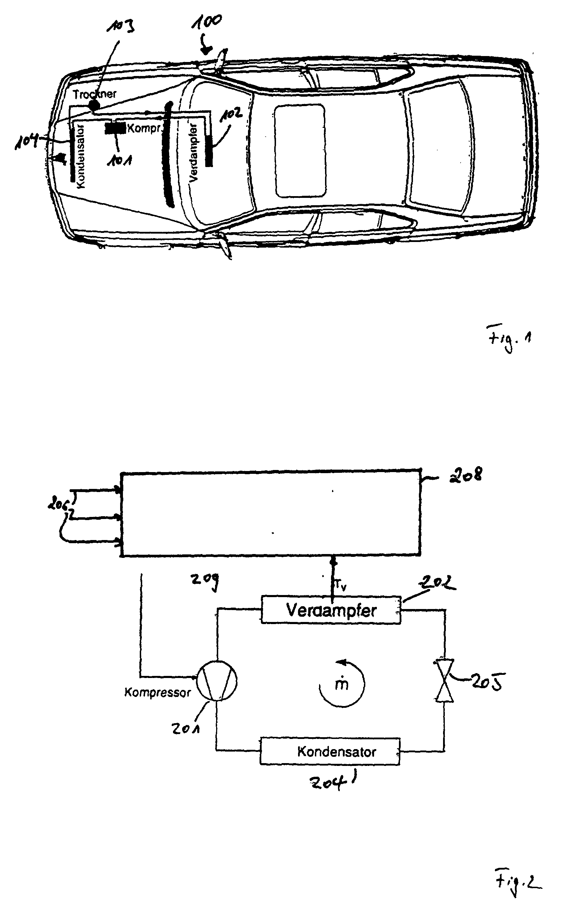

In Fig. 1 ist in schematischer Draufsicht ein Fahrzeug dargestellt, in welchem eine Klimaanlage mit Kompressor 101, Verdampfer 102, Trockner 103 und Kondensator 104 angeordnet ist. Erfindungsgemäß wird durch Variation der Verdampfertemperatur die Temperatur und die Feuchtigkeit der Einblasluft für das Fahrzeug verändert. Unter Berücksichtigung der Klimabehaglichkeit für die Insassen im Fahrzeug ist die Luftfeuchte mit Erhöhung der Verdampfertemperatur zu steigern. Begrenzt wird diese Option durch die Gefahr des Scheibenbeschlags und ein mögliches Erreichen einer "Schwülegrenze". Darüber hinaus muß eine ausreichende Kühlleistung sichergestellt sein.

Nachfolgend wird eine Ausführungsform eines erfindungsgemäßen Verfahrens beschrieben, wobei im Rahmen des Verfahrens eine Logik verwendet wird, die in Abhängigkeit von im Fahrzeug vorhandenen Parametern, wie Außentemperatur, Innentemperatur, etc., eine Wahl der Verdampfertemperatur erlaubt.

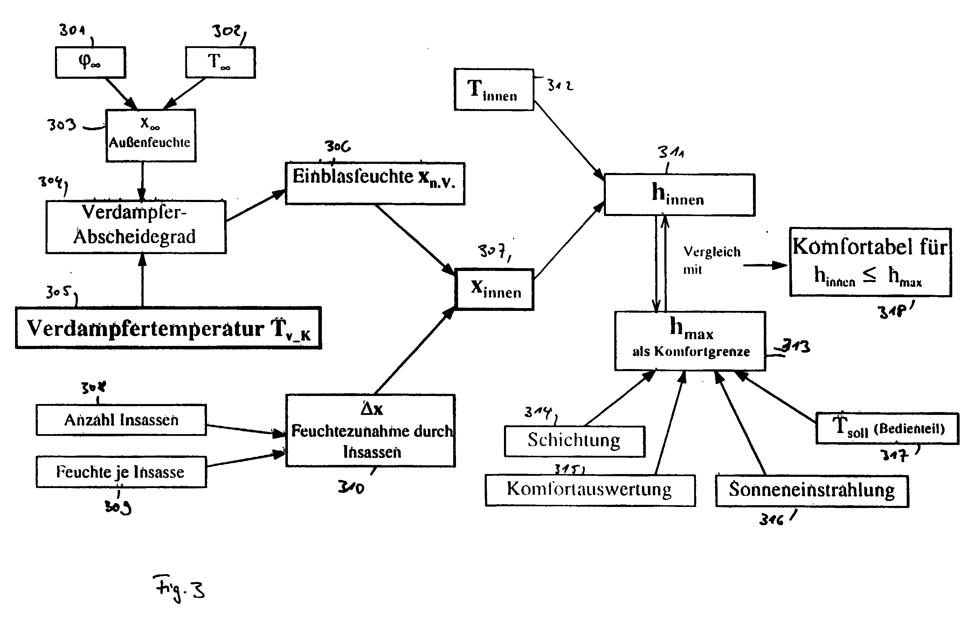

Beim vorliegenden Ausführungsbeispiel wird ein Kompressor eingesetzt, dessen Hubvolumen variiert werden kann. Ein solcher Kompressor ist in einem Blockdiagramm in Fig. 2 mit dem Bezugszeichen 201 dargestellt und wird von einer Klimaregelung 208 angesteuert. Durch unterschiedliche Volumenströme im Kältekreislauf der Klimaanlage lassen sich verschiedene Kälteleistungen variieren. Dies hat zur Folge, daß die Temperatur des Verdampfers angepaßt werden kann. Zur Hubvolumenverstellung hat der Kompressor einen elektrischen Eingang, der mit einem Signal aus der Regeleinrichtung beaufschlagt wird. In der Klimaregelung 208 gehen Eingangssignale 206 wie eine externe Temperaturvorgabe und die Verdampfertemperatur Tᵥ ein. Die Temperatur Tᵥ kommt von einem Verdampfer 202, durch den das Kühlmittel nach dem Kompressor, dem Kondensator 204 und dem Expansionsventil 205 geleitet wird.

Nachfolgend wird die Logik zur Verdampfertemperaturregelung dargelegt. Bei der Regelung müssen folgende Bedingungen beachtet werden. Die Behaglichkeit für die Insassen bezüglich der Luftfeuchtigkeit muß gesichert sein. Ein Scheibenbeschlag soll vermieden werden. Zur Kühlung soll eine ausreichende Kühlleistung zur Verfügung gestellt werden. Um diese Bedingungen in der Kombination zu erfüllen, müssen verschiedene Zusammenhänge berücksichtigt werden, die nachfolgend erläutert sind:

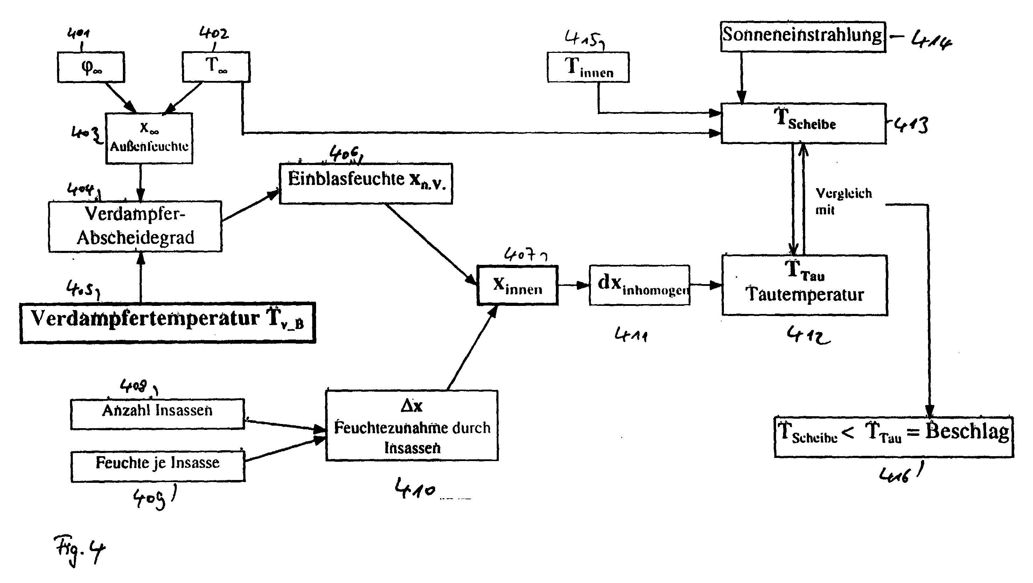

Die Behaglichkeitsbeurteilung für den Innenraum wird anhand von Fig. 3 dargestellt. Von links beginnend ist die Entstehung der Innenraumfeuchte Xᵢₙₙₑₙ 307 dargestellt. Ein wesentlicher Faktor für die Innenraumfeuchte Xᵢₙₙₑₙ ist die Einblasfeuchte x_{n.V.} 306 die vor allem von der Verdampfertemperatur T_{V_K} 305 abhängt, weil sie für die Trocknung der Außenluft (Feuchte ϕ ∞, 301, und Temperatur T∞, 302) verantwortlich ist (absolute Außenfeuchte x∞). Ausschlaggebend für die Trocknung der Außenluft ist die Funktion des Verdampfer-Abscheidegrads 304.

Die Innenraumluft wird ferner von den Insassen mit Wasser angereichert, was durch eine Feuchtezunahme Δx, 310, zum Ausdruck kommt. Die Feuchtezunahme Δx, 310, ist abhängig von der Anzahl der Insassen 308 sowie der Feuchte je Insassen 309. Die Anzahl der Insassen 308 kann über eine Sitzbelegungserkennung die Feuchte über vorgegebene Parameter ermittelt werden.

Aus der Innenraumfeuchte Xᵢₙₙₑₙ, 307, und der Innenraumtemperatur Tᵢₙₙₑₙ, 312 läßt sich eine spezifische Enthalpie (Enthalpie der feuchten Luft) für die Fahrgastzelle hᵢₙₙₑₙ, 311, bestimmen. Diese spezifische Enthalpie 311 wird nun mit einer Komfortgrenze hₘₐₓ, 313, verglichen und muß bei der vorliegenden Erfindung stets kleiner als dieser Grenzwert sein. Die zulässige spezifische Innenraumenthalpie hₘₐₓ, 313, stammt grundsätzlich aus einer mit Insassen durchgeführten Komfortbewertung. Zusätzlich sind drei Korrekturfaktoren vorgesehen, nämlich eine Schichtungseinstellung 314, die Sonneneinstrahlung 316 und die T_{Soll}-Einstellung 317. Falls der Fahrer eine kalte Schichtungseinstellung wählt oder eine niedrige Solltemperatur an einem Bedienteil 317 einstellt, so kann diesnicht nur eine Abkühlung des Innenraums als Ziel haben, sondern möglicherweise auch den Wunsch nach einer frischeren Luft. Hier besteht die Möglichkeit, die maximale Enthalpie (hᵢₙₙₑₙ) nach unten zu korrigieren.

Der Vergleich der ermittelten spezifischen Enthalpie (hᵢₙₙₑₙ) mit der maximal zulässigen Innenraumenthalpie hₘₐₓ ist durch das Kästchen 318 dargestellt.

Um eine behagliche Umgebung für die Fahrzeuginsassen bezüglich der Luftfeuchtigkeit zu realisieren, spielt die Verdampfertemperatur T_{V_K} wie anhand von Fig. 3 erläutert eine entscheidende Rolle. Insbesondere ist dabei anzumerken, daß sich die Enthalpie als hervorragende Größe zur Beurteilung des Innenraumkomforts dargestellt hat. In diesem-Zusammenhang wird auf die Veröffentlichung von Fanger, P.O. "Air Humidity And Perceived Air Quality, Laboratory of Environment of Energy, Department of Energy Engineering, Technical University Denmark" vom 19.11.1997 hingewiesen. Fanger hat festgestellt, daß sich die Luftqualität besonders gut in Abhängigkeit von der spezifischen Enthalpie, d. h. von verschiedenen Kombinationen von Lufttemperatur und Luftfeuchte ermitteln läßt.

Als nächsten Punkt der geforderten Bedingungen ist die Vermeidung von Scheibenbeschlag zu berücksichtigen.

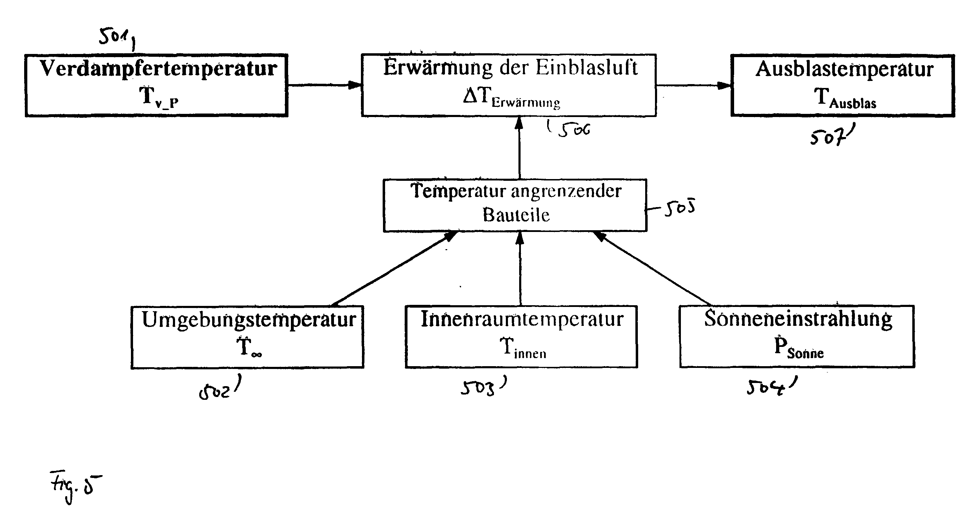

Anhand von Fig. 4 wird dies nachfolgend erläutert. Dabei entsprechen die mit den Bezugsziffern 401, 402, 403, 404, 406, 408, 409, 410, 407 und 415 dargestellten Größen den entsprechenden Größen in Fig. 3. Fig. 4 läßt erkennen, daß die Entstehung der Innenraumfeuchte xᵢₙₙₑₙ, 407, identisch mit jener aus der Komfortbetrachtung ist. Von Xᵢₙₙₑₙ, 407 läßt sich auf die Tautemperatur schließen, die zusammen mit der Scheibentemperatur T_{Scheibe}, 413, ausschlaggebend für einen möglichen Scheibenbeschlag ist. Die Größe dx_{inhomogen}, 411, welche zwischen die Innenraumfeuchte X_{Innen} und die Tautemperatur T_{Tau} geschaltet ist, soll mögliche Inhomogenitäten der Luftdurchmischung berücksichtigen. Nicht überall hat die Luft die gleiche Feuchtigkeit. Vielmehr bewirkt z. B. die Anwesenheit von Menschen Ungleichmäßigkeiten in der Feuchteverteilung. Die neben der Tautemperatur T_{Tau}, 412, für Beschlag mitverantwortliche Scheibeninnentemperatur T_{Scheibe}, 413, ist eine Funktion der Außen- (T∞) und Innenraumtemperatur Tᵢₙₙₑₙ, 415. Hierbei findet sich erneut die Einflußgröße "Sonneneinstrahlung" 414 wieder. Tagsüber, bei Sonnenschein, erhöht sich die Scheibentemperatur. Bei Nacht jedoch kann der kalte Strahlungshintergrund - Himmel - berücksichtigt werden. Bei einem Vergleich der Scheibentemperatur T_{Scheibe} mit der Tautemperatur T_{Tau} muß darauf geachtet werden, daß die Tautemperatur T_{Tau} nicht unterhalb der Scheibentemperatur T_{Scheibe} liegt. Entsprechend muß die Verdampfertemperatur T_{V_B} in Fig. 4 gewählt werden. Damit ergibt sich ein weiteres Kriterium für eine obere Verdampfertemperaturgrenze.

Als nächstes wird auf eine Sicherstellung einer ausreichenden Kühlleistung eingegangen.

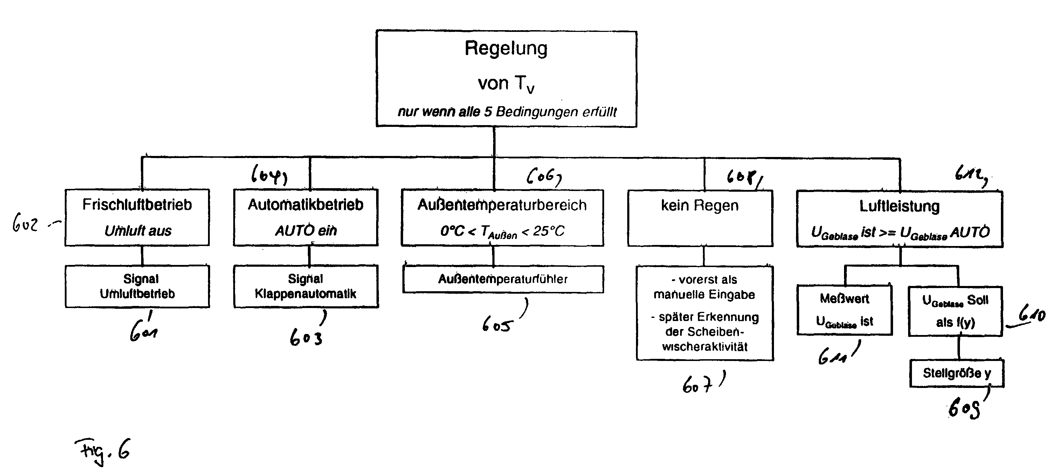

Bei momentanen Verdampfertemperaturwerten von 1 bis 3°C stellt sich kein Problem einer einzuhaltenden Kühlleistungsgrenze. Wird die Verdampfertemperatur jedoch auf eine weniger niedrige Temperatur eingestellt, ist es möglich, daß der Innenraum nicht ausreichend gekühlt wird. Aus einer Schichtungsstellung und den Werten Innentemperatur, Außentemperatur und eingestellter Solltemperatur wird eine Temperatur für die Luft aus den Belüftungsgittern bestimmt. Wird die Schichtung auf "kalt" gestellt, kann je nach Berechnung des Steuergeräts im Extremfall nur direkt dem Verdampfer entnommene Luft dem Innenraum zugeführt werden. Für die Verdampfertemperaturregelung bedeutet dies, daß nur maximal die Solltemperatur erreicht werden darf, die zum Ausgleichen auf der Belüftungsebene erforderlich ist. Um die Aufheizung der Luft in erwärmten Kanälen zu berücksichtigen muß die Temperaturgrenze T_{V} angepaßt werden. Dies ist in Fig. 5 in schematischer Weise dargestellt. Die Blöcke 502 (Umgebungstemperatur), 503 (Innenraumtemperatur) und 504 (Sonneneinstrahlung) bestimmen die Temperatur der angrenzenden Bauteile, die sich wiederum auf die Erwärmung der Einblasluft 506 in Form einer Erwärmung Δ T _{Erwärmung} auswirkt. Durch diesen Einfluß wird die Verdampfertemperatur T_{V_P} noch erwärmt, bis sie als Ausblastemperatur T_{Ausblas}, 507, aus den Lüftungsgittern austritt.

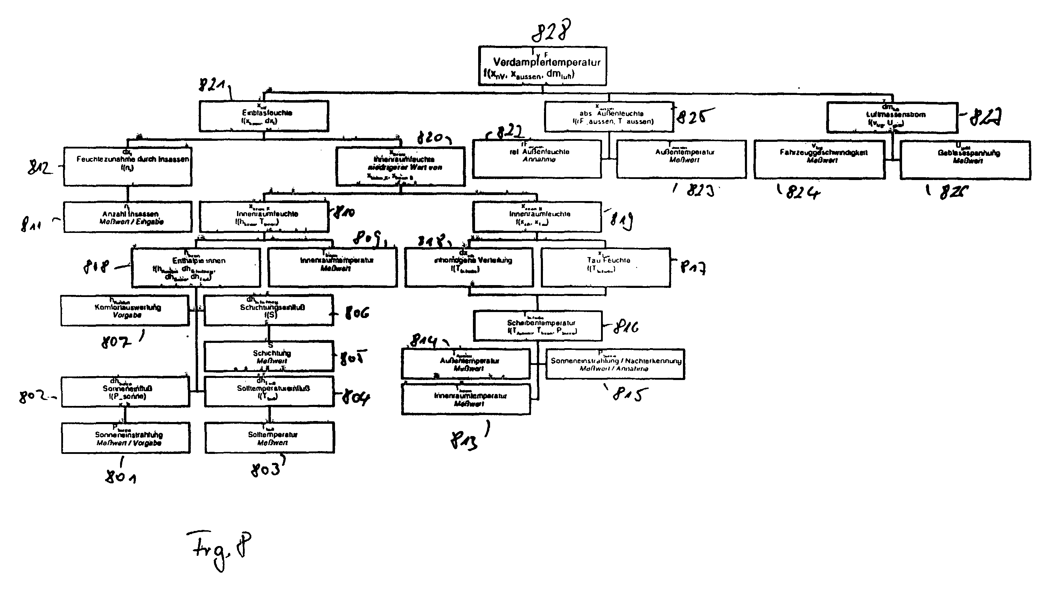

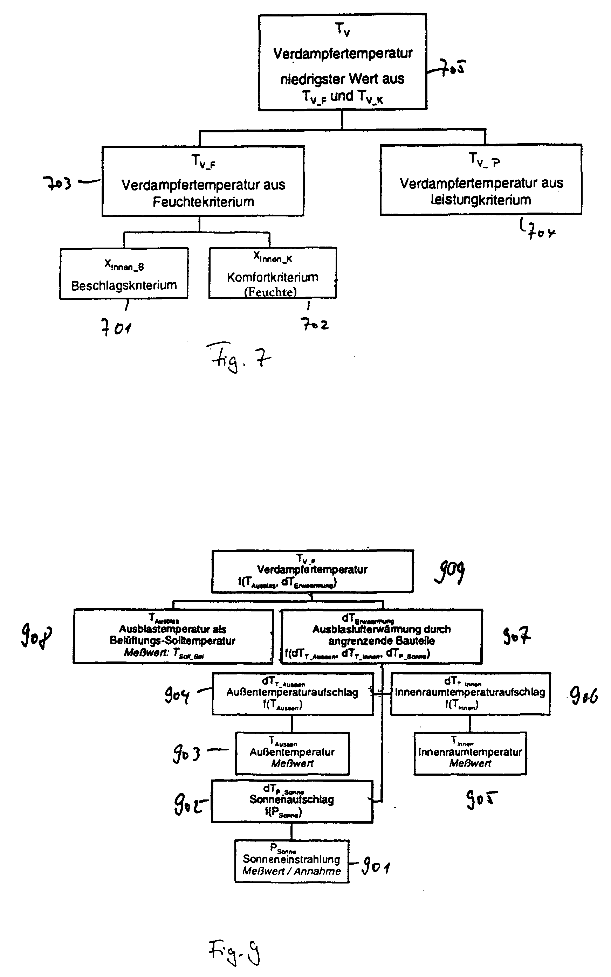

Eine übergeordnete Bestimmung der Verdampfertemperatur T_{V} aus allen vorgenannt beschriebenen Verdampfertemperaturen, kann aus Fig. 7 ersehen werden. Im wesentlichen wird der niedrigste Wert aus den Verdampfertemperaturwerten T_{V_F} und T_{V_P} als einzustellende Verdampfertemperatur T_{V}, 705, ausgewählt, wobei T_{V_F}, 703 die Verdampfertemperatur aus dem Feuchtekriterium und T_{V_P}, 704, die Verdampfertemperatur aus dem Leistungskriterium darstellt. Das Feuchtekriterium wiederum ergibt sich aus dem Beschlagskriterium 701, welches aufgrund der Beschlagsgrenze gewählt wurde, sowie dem Komfortkriterium 702, welches aufgrund der maximalen Luftenthalpie im Innenraum gewählt wurde. In diesem Zusammenhang wird auf die Ausführungen zu den Fig. 3 bis 5 verwiesen.

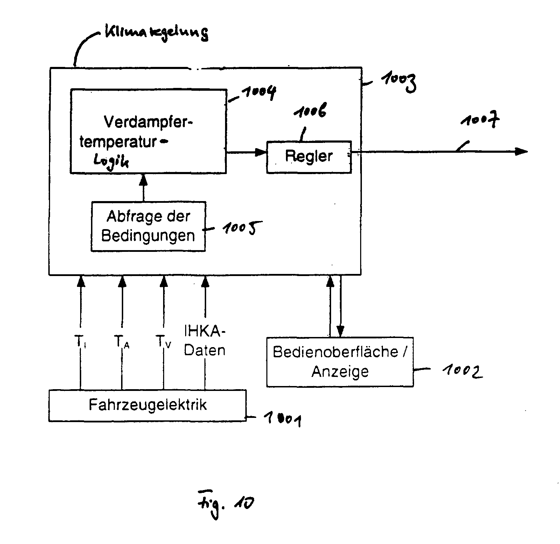

Die Verdampfertemperaturermittlung mit Bezug auf die Leistung läßt sich nochmals genauer aus Fig. 9 entnehmen. Die Verdampfertemperatur T_{V_P} stellt gemäß Bezugsziffer 909 eine Funktion der Ausblastemperatur T_{Ausblas} und der Erwärmung der Einblasluft Δ T_{Erwärmung} dar. Gemäß der Blöcke 901 bis 908 in Fig. 9 werden dabei die Sonneneinstrahlung P_{Sonne}, 901, der Sonnenaufschlag dT_{P_Sonne}, 902, die Innenraumtemperatur Tᵢₙₙₑₙ, 905, die Außentemperatur T_{außen}, 903, der Innentemperaturaufschlag dT_{T_Innen}, 906, und der Außentemperaturaufschlag dT_{T_Außen}, 904, berücksichtigt. Dies ergibt die Aufblaslufterwärmung dT_{Erwärmung} in 907, welche zusammen mit der Ausblastemperatur als Belüftungs-Sollwert T_{Ausblas}, 908, zu der Verdampfertemperatur T_{V_P} führt.

Die Verdampfertemperaturregelung aus dem Feuchtekriterium, welche in Fig. 7, bei 703 dargestellt ist, kann wie in Fig. 8 genauer angegeben ermittelt werden. Mittels der Sonneneinstrahlung Pₛₒₙₙₑ, 801, des Sonneneinflusses dh_{Sonne}, 802, der Solltemperatureinfluß Tₛₒₗₗ, 803, der Solltemperatur dh_{TSoll}, 804, dem Schichtungswert S, 805, dem Schichtungseinfluß dh_{Schichtung}, 806, und der Komfortauswertung h_{komfort}, 807, kann die zulässige spezifische Enthalpie hᵢₙₙₑₙ, 808, ermittelt werden. Zusammen mit der Innenraumtemperatur Tᵢₙₙₑₙ, 809, läßt sich die Innenraumfeuchte X_{innen_K} feststellen.

Auf der anderen Seite läßt sich über die Innenraumtemperatur T_{Innen}, 813, die Außentemperatur T_{Aussen}, 814, und der Sonneneinstrahlung P_{Sonne}, 815, die Scheibentemperatur T_{Scheibe}, 816, ermitteln. Unter Berücksichtigung der inhomogenen Verteilung dxᵢₙₕ , 818, sowie der Taufeuchte X_{Tau}, 817, ergibt sich die maximal zulässige Innenraumfeuchte x_{innen_B}, 819 (Beschlagskriterium). Die Innenraumfeuchte Xᵢₙₙₑₙ, 820, wird dann als niedrigster Wert von X_{innen_K} und X_{innen_B} ausgewählt.

Die Innenraumfeuchte xᵢₙₙₑₙ, 820, ergibt zusammen mit der Feuchtezunahme durch die Insassen dx_{I}, 812, welche aus der Anzahl der Insassen n_{I}, 811, ermittelt wird, die Einblasfeuchte x_{n.V.}, 821. Die Einblasfeuchte x_{n.V.}, 821, ergibt zusammen mit der absoluten Außenfeuchte X_{Aussen}, 825, und dem Luftmassenstrom dm_{luft}, 827, die Verdampfertemperatur T_{V_F}, 828. Die absolute Außenfeuchte X_{Aussen}, 825, läßt sich wiederum über die relative Außenfeuchte rF_{Aussen}, 822, und dem Außentemperaturwert Tₐᵤₛₛₑₙ, 823, ermitteln. Der Luftmassenstrom dm_{luft}, 827, läßt sich über die Fahrzeuggeschwindigkeit v_{fzg}, 824, und die Gebläsespannung U_{gebl}, 826, ermitteln.

Insgesamt kann mit der oben angegebenen Verdampfertemperaturregelung eine Klimaregelung realisiert werden, die den Bedingungen Behaglichkeit für die Insassen bezüglich der Luftfeuchtigkeit, Vermeidung von Scheibenbeschlag und Sicherung einer ausreichenden Kühlleistung genügt.

Beim vorliegenden Ausführungsbeispiel wird die erfindungsgemäße Regelung jedoch nicht bei jeder Umgebungs- oder Betriebsbedingung durchgeführt. Aus Fig. 6 ist zu entnehmen, daß die Regelung der Verdampfertemperatur T_{V} nur dann in der oben beschriebenen Weise durchgeführt wird, wenn sechs Bedingungen erfüllt sind. 1. Es muß der Frischluftbetrieb eingestellt sein (602). 2. Ferner soll die Klimaanlage im Automatikmodus betrieben werden (604). 3. Überdies muß die Außentemperatur im Bereich von 0 bis 25°C liegen (606). 4. Darüber hinaus darf es nicht regnen (608) und 5. die Luftleistung sollte größer oder gleich einer vorgegebenen Automatikgebläseluftleistung sein (612). Diese Größen kann man aus den jeweilig vorliegenden Signalen und Fühlern ableiten (Bezugsziffern 601, 603, 605, 607, 609, 610 und 611). Bei Abweichungen von z.B. Frischluft- oder Automatikbetrieb kann die Verdampfertemperaturregelung ebenso mit dem -dargestellten Schema aber anderen Grenzwerten und Sicherheiten betrieben werden.

Ein schematisches Blockdiagramm für eine Steuereinrichtung zur Durchführung des oben beschriebenen erfindungsgemäßen Verfahrens ist in Fig. 10 gezeigt. Nicht berücksichtigt wurden die Signale Sonneneinstrahlung, Außenfeuchte und Luftmassenstrom. Die bereits in dem Fahrzeug 100 vorliegende Fahrzeugelektrik 1001 stellt die notwendigen Temperaturdaten T_{I} (Tᵢₙₙₑₙ), T_{A} (T_{Außen}) und T_{V} (T_{Verdampfertemperatur)} einem Rechner 1003 zur Verfügung. Ferner werden weitere Daten der integrierten Heiz- und Klimaautomatik (IHKA-Daten) dem Rechner 1003 mitgeteilt. Der Rechner 1003 ist vorliegend als Rapid-Prototyping-Rechner ausgeführt und umfaßt eine Verdampfertemperaturlogik 1004, eine Abfrageeinrichtung für das Vorliegen von geforderten Bedingungen 1005 und einen Regler 1006. Entsprechend der von der Fahrzeugelektronik 1001 eingehenden Daten wird aus der Verdampfer temperaturlogik eine Verdampfertemperatur ausgelesen und dem Regler 1006 mitgeteilt, welcher ein Spannungssignal 1007 zu einem externen Eingang des Kompressors 2 (vgl. Fig. 2) ausgibt.

Insgesamt läßt sich die vorliegende Erfindung einfach und kostengünstig realisieren, da nur wenige neue Fahrzeugkomponenten notwendig sind und zwar eine entsprechende Rechnererweiterung im Heiz-Klima-Steuergerät, sowie ein regelbarer, extern ansteuerbarer Kompressor. Gleichwohl läßt sich mit dem erfindungsgemäßen Verfahren eine Kraftstoffersparnis durch zeitweises Anheben der Verdampfertemperatur erzielen. Das Anspannungspotential liegt nach diesseitiger Einschätzung im Jahresmittel bei etwa 25 % gegenüber einer herkömmlichen Regelung. Auf den gesamten Kraftstoffverbrauch eines Fahrzeugs umgelegt ergibt sich damit je nach Durchschnittsverbrauch des Fahrzeugs eine Einsparung in der Größenordnung von 1 - 4 %.

## Patentansprüche

1. Verfahren zur Regelung der Verdampfertemperatur bei einer Fahrzeugklimaanlage mit einem Verdampfer, einem Kompressor, einem Kondensator und einem Expansionsorgan, bei dem die Verdampfertemperatur in Abhängigkeit von Betriebsbedingungen eingestellt wird, wobei
ein erster Verdampfertemperaturwert (T_{V_F}) in Abhängigkeit von einem Beschlagskriterium (X_{innen_B}) und einem Komfortkriterium (X_{innen_K}) ermittelt wird,
ein zweiter Verdampfertemperaturwert (T_{V_P}) zur Sicherstellung einer ausreichenden Kühlleistung ermittelt wird und
als einzustellende Verdampfertemperatur (T_{V}) der Kleinste der beiden Verdampfertemperaturwerte ausgewählt wird,
**dadurch gekennzeichnet,**
**daß** als Komfortkriterium die spezifische Enthalpie (hᵢₙₙₑₙ) dient und die erste Verdampfertemperatur (T_{V_F}) derart festgelegt wird, daß die spezifische Enthalpie (hᵢₙₙₑₙ) einen Komfortgrenzwert (hₘₐₓ) nicht überschreitet.

2. Verfahren nach Anspruch 1,
**dadurch gekennzeichnet,**
**daß** die spezifische Enthalpie (hᵢₙₙₑₙ) aus der Innenraumfeuchte (xᵢₙₙₑₙ) und der Innenraumtemperatur Tᵢₙₙₑₙ bestimmt wird.

3. Verfahren nach einem der Ansprüche 1 oder 2,
**dadurch gekennzeichnet,**
**daß** als Beschlagskriterium die Scheibentemperatur (T_{Scheibe}) dient und das Beschlagskriterium so festgelegt wird, daß die Tautemperatur (T_{Tau}) die Scheibentemperatur (T_{Scheibe}) nicht unterschreitet.

4. Verfahren nach Anspruch 3,
**dadurch gekennzeichnet,**
**daß** die Scheibentemperatur (T_{Scheibe}) aus der Umgebungstemperatur (T∞) und der Innenraumtemperatur (Tᵢₙₙₑₙ) bestimmt wird.

5. Verfahren nach einem der vorhergehenden Ansprüche,
**dadurch gekennzeichnet,**
**daß** die zweite Verdampfertemperatur (T_{V_P}) in Abhängigkeit von der Erwärmung oder Kühlung einerseits und der Einblasmenge der Einblasluft andererseits gewählt wird.

6. Verfahren nach Anspruch 5,
**dadurch gekennzeichnet,**
**daß** bei der Bestimmung der zweiten Verdampfertemperatur (T_{V_P}) die Umgebungstemperatur, die Innenraumtemperatur, die Temperatur der angrenzenden Bauteile und/oder die Sonneneinstrahlung berücksichtigt werden.

7. Verfahren nach einem der vorhergehenden Ansprüche,
**dadurch gekennzeichnet,**
**daß** eine Umschaltung auf eine konstante Verdampfertemperatur oder eine angepaßte Ersatzwertgenerierung dann stattfindet, wenn vorgegeben geforderte Betriebsbedingungen nicht vorliegen.

8. Verfahren nach Anspruch 7,
**dadurch gekennzeichnet,**
**daß** es sich bei den Bedingungen um einen Frischluftbetrieb, einen Automatikbetrieb, einen Betrieb ohne Regen, eine Mindestluftleistung und/oder einen bestimmten Außentemperaturbereich handelt.

## Claims

1. A method for controlling the evaporator temperature in a vehicle air conditioner unit with an evaporator, a compressor, a condenser and an expansion member, in which the evaporator temperature is set in dependency on operating conditions, in which
a first evaporator temperature value (T_{V_F}) is calculated in dependency on a misting criterion (X_{innen_B}) and a comfort criterion (X_{innen_K}), a second evaporator temperature value (T_{V_P}) is calculated to ensure sufficient cooling performance and
the smaller of the two evaporator temperature values is selected as the evaporator temperature (T_{V}) to be set,
**characterised in that**
as comfort criterion the specific enthalpy (hᵢₙₙₑₙ) is used and the first evaporator temperature value (T_{V_F}) is set in such a manner that the specific enthalpy (hᵢₙₙₑₙ) does not exceed a limiting comfort value (hₘₐₓ.).

2. A method according to Claim 1,
**characterised in that**
the specific enthalpy (hᵢₙₙₑₙ) is derived from the interior space humidity (xᵢₙₙₑₙ) and the interior space temperature Tᵢₙₙₑₙ.

3. A method according to one of the Claims 1 or 2,
**characterised in that**
the window temperature (T_{Scheibe}) serves as the misting criterion and the misting criterion is set such that the dew point temperature (T_{Tau}) does not fall below the window temperature (T_{Scheibe}).

4. A method according to Claim 3,
**characterised in that**
the window temperature (T_{Scheibe}) is established from the ambient temperature (T∞) and the interior space temperature (Tᵢₙₙₑₙ).

5. A method according to one of the foregoing Claims,
**characterised in that**
the second evaporator temperature value (T_{V_P}) is selected in dependency on the heating or cooling on the one hand and the quantity of the forced air input.

6. A method according to Claim 5,
**characterised in that**
in the determination of the second evaporator temperature value (T_{V_P}) the ambient temperature, the interior space temperature, the temperature of the contiguous components and/or the incoming solar radiation are taken into account.

7. A method according to one of the foregoing Claims,
**characterised in that**
a switch-over takes place to a constant evaporator temperature or the generation of a suitable artificial value, if the prescribed operating conditions are not present.

8. A method according to Claim 7,
**characterised in that**
the conditions of fresh air operation, automatic operation, operation without rain, the lowest air power and/or a determined outside temperature range apply.

## Revendications

1. Procédé de régulation de la température de l'évaporateur d'une installation de climatisation de véhicule composée d'un évaporateur, d'un compresseur, d'un condenseur et d'un organe d'expansion, selon lequel on règle la température de l'évaporateur selon les conditions de fonctionnement, dans lequel :
- on détermine une première température de l'évaporateur (T_{V-F}) selon un critère d'embuage (X_{int-B}) et d'un critère de confort (X_{int.-K}),
- une seconde valeur de la température d'évaporateur (T_{V-P}) garantit une puissance de refroidissement suffisante et,
- comme température d'évaporateur (T_{V}) régler, on choisit la plus petite des deux valeurs de température de l'évaporateur,
**caractérisé en ce que**
comme critère de confort, on utilise l'enthalpie spécifique (hᵢₙₜ) et on fixe la première température de l'évaporateur (T_{V-F}) pour que l'enthalpie spécifique (h_{int.}) ne dépasse pas une valeur de confort (hₘₐₓ).

2. Procédé selon la revendication 1,
**caractérisé en ce qu'**
on détermine l'enthalpie spécifique (h_{int.}) à partir de l'humidité de l'habitacle (X_{int.}) et de la température de l'habitacle (Tᵢₙₜ).

3. Procédé selon Tune des revendications 1 ou 2,
**caractérisé en ce que**
comme critère d'embuage, on utilise la température des vitres (Tᵥᵢₜᵣₑ) et on fixe le critère d'embuage pour que la température de rosée (T_{rosée}) ne passe pas en dessous de la température de vitres (Tᵥᵢₜᵣₑ).

4. Procédé selon la revendication 3,
**caractérisé en ce qu'**
on détermine la température des vitres (Tᵥᵢₜᵣₑ) à partir de la température ambiante (T∞) et de la température de l'habitacle (T_{int.})

5. Procédé selon l'une des revendications précédentes,
**caractérisé en ce qu'**
on sélectionne la seconde température d'évaporateur (T_{V-P}) en fonction du réchauffement ou du refroidissement d'une part et de la quantité d'air soufflée d'autre part.

6. Procédé selon la revendication 5,
**caractérisé en ce qu'**
en déterminant la seconde température d'évaporateur (T_{V-P}), on tient compte de la température ambiante, de la température de l'habitacle, de la température des composants voisins et/ou du rayonnement solaire incident.

7. Procédé selon l'une des revendications précédentes,
**caractérisé en ce qu'**
on commute sur une température d'évaporation constante ou on génère une valeur de remplacement adaptée si des conditions de fonctionnement requises ne sont pas satisfaites.

8. Procédé selon la revendication 7,
**caractérisé en ce que**
les conditions sont le fonctionnement avec de l'air frais, le fonctionnement automatique, le fonctionnement sans pluie, un débit d'air minimum et/ou une plage de température extérieure, déterminée.
